(19) **Europäisches Patentamt European Patent Office Office européen des brevets**

(11) **EP 3 659 109 B1**

(12) **FASCICULE DE BREVET EUROPEEN**

(45) Date de publication et mention de la délivrance du brevet:
**01.05.2024 Bulletin 2024/18**

(51) Classification Internationale des Brevets (IPC):
**G06T 7/00** (2017.01)   **G06T 7/73** (2017.01)
**G02C 7/02** (2006.01)   **G02C 13/00** (2006.01)

(21) Numéro de dépôt: **18740255.7**

(52) Classification Coopérative des Brevets (CPC):
**G06T 7/97; G02C 13/005; G06T 7/73;**
G06T 2207/10012; G06T 2207/30201

(22) Date de dépôt: **20.07.2018**

(86) Numéro de dépôt international:
**PCT/EP2018/069792**

(87) Numéro de publication internationale:
**WO 2019/020521 (31.01.2019 Gazette 2019/05)**

(54) **PROCÉDÉ DE DÉTERMINATION D'AU MOINS UN PARAMÈTRE ASSOCIÉ À UN DISPOSITIF OPHTALMIQUE**

VERFAHREN ZUR BESTIMMUNG MINDESTENS EINES MIT EINER OPHTHALMISCHEN VORRICHTUNG VERBUNDENEN PARAMETERS

METHOD FOR DETERMINING AT LEAST ONE PARAMETER ASSOCIATED WITH AN OPHTHALMIC DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2017 FR 1757070**

(43) Date de publication de la demande:
**03.06.2020 Bulletin 2020/23**

(73) Titulaires:
• **Fittingbox**
**31670 Labege (FR)**
• **Essilor International**
**94220 Charenton-Le-Pont (FR)**

(72) Inventeurs:
• **LE GALLOU, Sylvain**
**31650 Saint Orens De Gameville (FR)**
• **GUENARD, Jérome**
**31500 Toulouse (FR)**
• **CHOUKROUN, Ariel**
**31650 Saint Orens de Gameville (FR)**
• **COURAL, Serge**
**91090 Lisses (FR)**

(74) Mandataire: **Ipside**
**6, Impasse Michel Labrousse**
**31100 Toulouse (FR)**

(56) Documents cités:
EP-A1- 2 772 795     US-A1- 2009 021 693
US-A1- 2014 253 875     US-A1- 2014 253 875

**Description**

**DOMAINE TECHNIQUE DE L'INVENTION**

Le domaine de l'invention est celui de l'optique, et plus particulièrement celui de la mesure en vue de l'adaptation d'au moins un verre d'un dispositif ophtalmique à la vue d'un individu.

Plus précisément, l'invention concerne un procédé de détermination d'au moins un paramètre associé à un dispositif ophtalmique destiné à être porté par un individu. Un tel dispositif peut être par exemple une paire de lunettes ou un masque.

L'invention trouve notamment des applications dans le domaine de la vente d'un dispositif ophtalmique en magasin ou en kiosque autonome installé par exemple dans une surface de vente non spécialisée en optique.

**ÉTAT DE LA TECHNIQUE**

Généralement, l'adaptation des verres à la vue d'un individu avant leur assemblage dans une monture d'une paire de lunettes nécessite de déterminer des paramètres optiques tels que la largeur du verre, la hauteur du verre, la largeur du pont, le diamètre effectif, l'angle de galbe, la distance pupillaire, les demi-écarts pupillaires, les hauteurs des pupilles, les hauteurs des segments, l'angle pantoscopique, ou la distance verre-oeil. Deux normes principales existent pour indiquer les dimensions du contour d'un cercle d'une monture : le système BOXING basé sur un encadrement du cercle par un rectangle ou le système DATUM basé sur la largeur à mi-hauteur du cercle. Le système BOXING est la norme généralement utilisée par les fabricants de verres et est par défaut sur les meuleuses automatiques alors que le système DATUM est la norme traditionnelle. Dans le système DATUM, la hauteur est généralement mesurée à l'aide d'un réglet directement sur le verre.

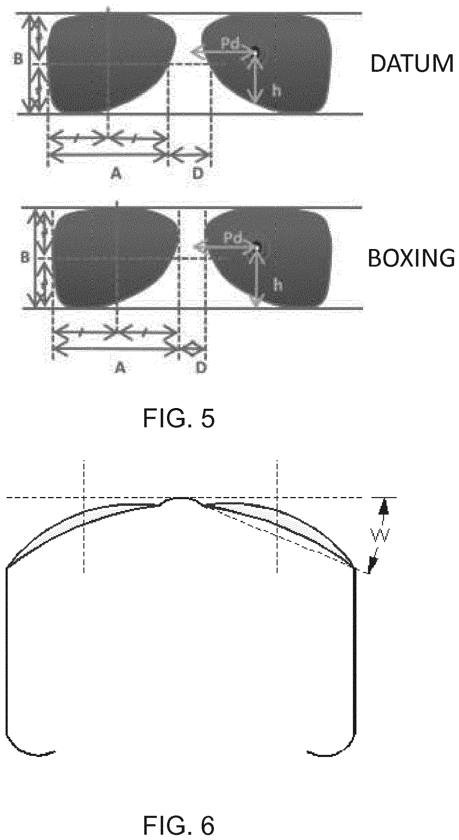

La figure 5 illustre la différence entre le système BOXING et DATUM, dans lesquels A représente la largeur du verre, D la largeur du pont, B la hauteur du verre. La principale différence entre les deux systèmes porte sur la définition de la largeur du pont D qui dans le système DATUM correspond à la distance entre les verres prise à mi-hauteur des verres alors dans le système BOXING, la largeur du pont D correspond au minimum de distance entre les verres. Le point de centrage du verre est défini par la distance interpupillaire Pd et par la hauteur des pupilles h. La distance interpupillaire (Pd) est représentée sur la figure 5 à partir de l'axe médian entre les verres. La hauteur h est quant à elle fonction du système choisi. Dans le système BOXING, la hauteur h est définie à partir de la base des verres, c'est-à-dire à partir d'une droite tangente simultanément aux deux verres. Tandis que dans le système DATUM, la hauteur h est définie à partir du bord inférieur du verre à l'aplomb du point de centrage.

La figure 6 représente une monture vue du dessus illustrant l'angle W appelé angle de galbe ou angle de cintre, défini par l'angle entre la tangente au pont et l'un des plans reliant les extrémités de la face avant d'une des lentilles. Cet angle est mesuré horizontalement.

Les paramètres optiques intrinsèques à la monture choisie, c'est-à-dire mesurables sans nécessiter la présence d'un porteur de la monture, comme les paramètres A, B, D et W, sont généralement mesurés sur des images 2D de la monture. Ces paramètres sont souvent alors déterminés de façon peu précise car les images servant à la mesure correspondent à des projections dans un plan d'objets tridimensionnels en particulier souvent courbes ou arrondis.

Les autres mesures oculaires intéressantes pour le montage des verres et nécessitant des mesures sur le patient sont : la distance pupillaire (*PD* : acronyme du terme anglais « *Pupillary Distance* »), les demi distances pupillaires (*monoPD*), l'angle pantoscopique (PA), la distance verre-oeil (*VD* : acronyme du terme anglais « *Vertex Distance* »), les hauteurs données entre le bas de la monture et le centre des pupilles (*FH* : acronyme du terme anglais « *Fitting Heights* ») et les hauteurs entre le bas de la monture et la paupière basse recouvrant partiellement la pupille (*SH* : acronyme du terme anglais « *Segment Heights* ») et enfin le diamètre effectif (*ED* : acronyme du terme anglais « *Effective Diameter* ») qui correspond au diamètre minimum du verre dans lequel on doit tailler le verre de la paire.

Ces paramètres optiques en relation avec le port de la monture sur le visage de l'individu sont généralement calculés par des méthodes indirectes en utilisant une mire venant se positionner sur le visage de l'individu, en se clipsant en général sur la monture sélectionnée par l'individu. La mire utilisée présente des repères dont la configuration géométrique est connue précisément afin de permettre de mesurer les paramètres oculaires et optiques liés à l'individu sur une image de son visage portant la monture avec la mire.

L'inconvénient majeur de ces techniques est que la monture dotée de la mire nécessite à la fois un positionnement parfait de la mire sur la monture et que l'individu soit le plus fronto-parallèle possible par rapport au dispositif de mesure. Cette double condition permet notamment, lorsqu'elle est respectée, d'éviter des erreurs de parallaxe sur les mesures, ce qui est en pratique rarement le cas.

Par conséquent, ces techniques aboutissent généralement à des erreurs de mesure, liées à un mauvais positionnement de la mire, qui se reportent sur le positionnement des verres corrigés dans la monture choisie par l'individu, étant entendu que le report de mesure entre deux montures distinctes peut également introduire un écart supplémentaire au positionnement des corrections sur les verres assemblés dans la monture choisie.

D'autre part, il convient de souligner que ces techniques proposent généralement une monture mire présentant une face sensiblement plane et non galbée, ce qui introduit une difficulté supplémentaire lors du report de mesure sur des montures galbées.

Enfin, ces techniques à base d'une mire peuvent être considérées comme invasives ou gênantes par l'individu.

Il convient également de souligner que la mire est généralement spécifique à un dispositif particulier de mesure.

La demande de brevet publiée US 2014/253875 A1 divulgue une méthode détermination de paramètre oculaires à partir d'une reconstruction du visage, obtenue à l'aide d'un objet de référence (carte, lunettes précalibrées).

La demande de brevet publiée US 2009/021693 A1 divulgue une méthode d'acquisition de paramètres oculaires à l'aide d'un système stéréoscopique et de l'analyse d'images stéré. La position des lunettes portées est déterminée à l'aide de points de référence disponible sur les lunettes.

La demande de brevet publiée EP 2 772 795 A divulgue une méthode de reconstruction de lunettes, portée par un utilisateur, pour la détermination de paramètres oculaires.

## OBJECTIFS DE L'INVENTION

Aucun des systèmes actuels ne permet de répondre simultanément à tous les besoins requis, à savoir de proposer une technique automatique de mesure qui soit précise et insensible au positionnement du visage par rapport au dispositif d'acquisition.

Un autre objectif de l'invention est de proposer une technique de mesure qui ne nécessite pas l'intervention d'un homme de l'art dans le domaine de la mesure optique, notamment d'un opticien.

Un autre objectif de l'invention est de proposer une technique de mesure utilisant n'importe quel type de monture de paire de lunettes, et notamment directement sur la monture sélectionnée par un individu nécessitant une correction optique.

Un autre objectif de l'invention est de minimiser les erreurs de mesure, en évitant les biais liés à un mauvais positionnement et/ou à un report de mesure.

Un autre objectif de l'invention est de proposer une technique qui permette d'ajuster au mieux le positionnement de la correction apportée pour une vision de près et/ou de loin sur le verre assemblé dans la monture choisie par l'individu.

## EXPOSÉ DE L'INVENTION

Ces objectifs, ainsi que d'autres qui apparaîtront par la suite sont atteints à l'aide d'un procédé de détermination automatique d'au moins un paramètre associé à un dispositif ophtalmique sélectionné par un individu, ledit dispositif ophtalmique comprenant une monture appelée monture sélectionnée, ladite détermination étant effectuée à partir d'une image du visage de l'individu portant une monture d'une paire de lunettes appelée monture portée, ladite monture portée étant la monture sélectionnée ou une monture d'un deuxième dispositif ophtalmique, ladite image étant acquise par un système d'acquisition d'images.

Les modes de réalisation dans lesquels la monture portée est la monture sélectionnée ne sont pas couverts par le texte des revendications mais sont considérés comme utiles à la compréhension de l'invention.

Un paramètre déterminé par le procédé, pouvant être appelé paramètre optique, est un paramètre lié au visage de l'individu tel que la distance interpupillaire, un paramètre lié à une monture d'une paire de lunettes, tel que la largeur du verre, la largeur du pont ou la largeur de branche, ou un paramètre relatif à la fois à la monture et au visage de l'individu, tel que la distance verre-oeil ou l'angle pantoscopique. A partir du ou des paramètre(s) déterminé(s) par le procédé, il est ainsi possible de tailler un verre correctif ou non afin de le positionner correctement dans la monture en fonction de l'individu amené à porter la monture.

Un dispositif ophtalmique peut être par exemple une paire de lunettes ou un masque. Le dispositif ophtalmique peut également être un dispositif de protection des yeux de l'individu portant ledit dispositif sur son visage.

Il convient de souligner que la monture d'un dispositif ophtalmique s'étend généralement latéralement de part et d'autre de la tête de l'individu.

La monture portée par l'individu peut avantageusement être la monture finale sélectionnée par l'individu, ce qui permet de déterminer les paramètres précisément en fonction du port sur le visage de l'individu de la monture sélectionnée. Généralement, la monture sélectionnée est une monture réelle choisie par l'individu qui désire acheter cette monture dans laquelle vient s'assembler au moins un verre correcteur.

Il convient de souligner que dans un mode avantageux la monture portée par l'individu est une monture classique qui ne comporte pas de repère spécifique destiné à la mesure de paramètres par identification de la position tridimensionnelle des repères.

Par ailleurs, la monture portée peut avantageusement comprendre au moins un verre sans corrections optiques, couramment appelé verre neutre, ou au moins un verre correcteur. Il convient de souligner que ledit verre correcteur comprend au moins une correction optique.

Dans un premier cas, qui n'est pas couvert pas le texte des revendications, dans lequel l'individu porte la monture sélectionnée dans l'image acquise, le procédé de détermination comprend des étapes de :

- détection d'au moins un point caractéristique d'au moins un oeil de l'individu sur l'image acquise et estimation dans le repère du système d'acquisition d'images, de la position tridimensionnelle du ou des point(s) caractéristique(s) détecté(s) ;
- détection de la monture sélectionnée et estimation de la position tridimensionnelle de la monture sélectionnée dans le repère du système d'acquisition d'images en alignant une représentation tridimensionnelle de la monture sélectionnée avec la monture sélectionnée dans l'image acquise ;
- expression de la position de chaque point caractéristique par rapport à la représentation tridimensionnelle de la monture sélectionnée ;
- détermination du ou des paramètre(s) à partir de la position relative des yeux par rapport à la représentation tridimensionnelle de la monture sélectionnée.

Dans le deuxième cas, dans lequel l'individu porte la monture du deuxième dispositif ophtalmique, également appelée deuxième monture, dans l'image acquise, le procédé de détermination comprend les étapes de la revendication 1.

Ainsi, dans les deux cas, la mesure d'un ou de plusieurs paramètres est précise car directement effectuée sur la monture sélectionnée par l'individu grâce à une représentation fidèle de la monture sélectionnée qui vient se superposer virtuellement à la monture portée. Ces paramètres mesurés sont notamment utiles pour l'adaptation des verres à la monture.

Dans le deuxième cas, la deuxième monture sert de référence de positionnement pour la monture sélectionnée. Un décalage peut être introduit car les deux montures n'étant généralement pas identiques, sont positionnées différemment lors de leur port sur le visage. Notamment, les points de contact au niveau du nez et des oreilles peuvent être différents en fonction de la forme et/ou de la taille de chaque monture.

Le point caractéristique de l'œil est préférentiellement un point caractéristique de la pupille, un point caractéristique de l'iris ou un point caractéristique du globe oculaire tel que par exemple son centre de rotation.

Il convient de souligner que l'expression de la position de chaque point caractéristique est généralement effectuée dans un repère commun avec celui de la représentation tridimensionnelle de la monture sélectionnée. Préférentiellement, pour déterminer les paramètres, le repère utilisé dans le calcul correspond au repère de la représentation tridimensionnelle de la monture sélectionnée.

La représentation d'une monture a été généralement effectuée par des techniques de modélisation bien connues de l'homme du métier, comme par exemple celle décrite dans la demande de brevet internationale publiée sous le numéro WO 2013/139814.

Il convient de souligner que la qualité de la mesure est fonction de la qualité de la représentation tridimensionnelle de la monture dans l'espace virtuel. Sans l'alignement de la représentation de la monture réellement portée avec la monture portée dans l'image acquise, il est très difficile d'obtenir directement la position tridimensionnelle de monture réellement portée par rapport au système d'acquisition d'images, ce qui ne permet pas d'obtenir une qualité de mesure fiable et précise.

Il convient également de souligner que la détermination du positionnement tridimensionnel de la monture portée s'effectue notamment par l'intermédiaire de la monture virtuelle qui vient s'aligner sur la monture portée dans l'image acquise et non par un calcul direct de la position de la monture portée par un scanner tridimensionnel ou avec une caméra de profondeur.

Par ailleurs, la détermination du positionnement peut aussi bien être effectuée sur une image, sur une carte de profondeur ou sur un nuage de points issus d'un scanner. En effet, pour chacun de ces cas, un alignement d'une représentation tridimensionnelle de la monture est effectué soit en deux dimensions par l'intermédiaire d'une projection de la représentation tridimensionnelle de la monture sur l'image acquise ou directement en trois dimensions par l'intermédiaire de la carte de profondeur ou du nuage de points du scanner. Cet alignement de la représentation tridimensionnelle de la monture permet notamment de garder la sémantique de la paire de lunettes et d'éviter d'interpréter les images acquises.

À titre d'exemple, il est possible d'obtenir actuellement une représentation tridimensionnelle de la monture dans un espace virtuel avec moins de 0,2 mm d'écart par rapport à la monture réelle, permettant par conséquent d'obtenir une qualité de mesure des paramètres inférieure à 0,5 mm, avantageusement inférieure à 0,1 mm.

Par ailleurs, la détection du ou des point(s) caractéristique(s) peut s'effectuer de manière automatique ou manuellement par un homme de l'art tel qu'un opticien.

Dans des modes de mise en oeuvre particuliers de l'invention, l'estimation de la position tridimensionnelle de la monture portée est effectuée en calculant le minimum d'une fonction de distance entre le contour de la projection de la représentation tridimensionnelle de la monture portée et le contour de la monture portée dans l'image acquise, la représentation tridimensionnelle de la monture portée pouvant être articulée et/ou déformée, de façon à bien positionner la représentation tridimensionnelle de la monture portée, puis en calculant la position tridimensionnelle de la représentation tridimensionnelle de la monture portée, estimée correspondre à la position tridimensionnelle réelle de la monture portée.

Ainsi, la représentation de la monture portée pouvant être articulée et/ou déformée, la représentation correspond avec plus de précision avec la monture réellement portée car la fonction de minimisation permettant d'ajuster la représentation de la monture portée permet d'obtenir des meilleurs résultats. En outre, étant donné que la représentation est plus précise, la détermination du ou des paramètre(s) est améliorée. En d'autres termes, les erreurs de mesure effectuée par le procédé sont réduites.

Dans des modes de mise en oeuvre particuliers de l'invention, le point caractéristique de chaque pupille est le centre de la pupille qui est calculé comme le centre d'un cercle représentant l'iris, ledit cercle étant positionné et orienté en trois dimensions en minimisant une fonction de distance entre la projection du cercle sur l'image et le contour de la pupille sur l'image.

Dans des modes de mise en oeuvre particuliers de l'invention, la position du centre du globe oculaire d'un oeil est calculée :

- dans le cas où le point de visée dudit oeil est connu, comme égal au point situé sur la droite définie par le centre de la pupille dudit oeil et ledit point de visée, à une distance égale au rayon moyen d'un globe oculaire ;
- dans le cas où le point de visée dudit oeil est inconnu, comme égal au centre d'une sphère de rayon égal au rayon moyen de globe oculaire et pour laquelle l'iris représente un plan de coupe.

Dans des modes de mise en oeuvre particuliers de l'invention, le procédé comprend également des étapes de :

- détermination de la position 3D du point de visée de chaque oeil ;
- correction de la position du centre de rotation du globe oculaire à partir de la position 3D du point de visée préalablement déterminée.

Dans des modes de mise en oeuvre particuliers de l'invention, la position 3D du point de visée de chaque oeil correspond à un élément dont la position est connue par rapport au système d'acquisition d'images.

Préférentiellement, un tel élément est une image se reflétant dans un miroir positionné à proximité du système d'acquisition d'images.

Il convient de souligner que le miroir est généralement avantageusement orienté de telle sorte que l'individu voit l'image de son visage.

Ainsi, lorsque l'individu se regarde dans le miroir, la position 3D du point de visée correspond à l'image d'un point de son visage se reflétant dans le miroir, tel qu'un point à proximité des yeux ou correspondant à l'un des yeux de l'individu. La position 3D du point de visée peut également correspondre à un point médian entre les yeux de l'individu s'affichant sur le miroir.

Il convient de souligner que l'utilisation du miroir permet de mesurer un PD moyen en se rapprochant des conditions d'un PD à l'infini. En effet, le miroir permet aux yeux de l'individu de focaliser sur un point plus éloigné que la position réelle du miroir. Ainsi, lorsque l'individu regarde l'image de son visage à travers le miroir, la distance entre ces yeux et le point de visée est sensiblement le double de celle entre ces yeux et le miroir.

Dans des modes de mise en oeuvre particuliers de l'invention, la position du point de visée correspond à celle d'une caméra du système d'acquisition d'images.

Dans des modes de mise en oeuvre particuliers de l'invention, le procédé comprend également une étape de détermination du décalage de positionnement entre la représentation tridimensionnelle de la monture sélectionnée et la représentation tridimensionnelle de la deuxième monture portée par l'individu, en positionnant les deux représentations tridimensionnelles sur un modèle tridimensionnel représentatif d'un visage.

Dans des modes de mise en oeuvre particuliers de l'invention, le procédé comprend également une étape d'élaboration d'un modèle tridimensionnel du visage, le modèle tridimensionnel comprenant le ou les point(s) caractéristique(s) détecté(s), et une étape de superposition de la monture virtuelle sur le modèle tridimensionnel du visage.

Dans des modes de mise en oeuvre particuliers de l'invention, le procédé comprend également une étape d'acquisition préalable d'au moins une image du visage de l'individu sans lunettes, l'élaboration du modèle tridimensionnel du visage comprenant une sous-étape d'alignement du modèle du visage élaboré sans lunettes avec le visage de l'individu.

Il convient de souligner que les représentations du visage peuvent être des représentations tridimensionnelles ou des images prises selon un angle de vue similaire, voire quasiment identique.

En d'autres termes, l'élaboration du modèle tridimensionnel du visage comprend des sous-étapes de :

- détermination des paramètres réels de positionnement et d'orientation du visage de l'individu par rapport au système d'acquisition d'images ;
- représentation dans un espace virtuel du visage de l'individu par un modèle virtuel préalablement généré, le modèle virtuel, appelé avatar, étant positionné et orienté dans le repère du système d'acquisition d'images grâce aux paramètres réels déterminés précédemment.

Dans des modes de mise en oeuvre particuliers de l'invention, le système d'acquisition d'images est stéréoscopique.

En d'autres termes, dans ces modes de réalisation, le système d'acquisition d'images comprend au moins deux caméras décalées l'une par rapport à l'autre et orientées similairement afin de pouvoir déduire de deux images acquises simultanément une distance par rapport au système d'acquisition d'images, d'un objet de la scène acquise par ledit système.

Préférentiellement, le système d'acquisition comprend au moins trois caméras.

Dans des modes de mise en oeuvre particuliers de l'invention, le système d'acquisition d'images comprend une caméra de profondeur.

Dans des modes de mise en oeuvre particuliers de l'invention, le système d'acquisition d'images comprend au moins une caméra infrarouge.

Ainsi, le système d'acquisition d'images peut acquérir plus facilement une image des yeux situés derrière un verre solaire, qui généralement coupent au moins partiellement la lumière visible.

Dans des modes de mise en oeuvre particuliers de l'invention, tout ou partie des caméras du système d'acquisition d'images est calibré métriquement.

En d'autres termes, les paramètres intrinsèques de focale, de centre optique et de déformation de l'objectif de chaque caméra sont connus, ainsi que les paramètres extrinsèques de positionnement et d'orientation relatif des caméras dans le repère, avantageusement métrique, du système d'acquisition d'images, ce qui permet d'effectuer des mesures directement sur l'image et de déduire la valeur réelle en connaissant l'échelle correspondante à la caméra.

Ainsi, le ou les paramètre(s) peuvent être déterminés directement à partir des images sans connaître précisément une dimension de la paire de lunettes portée.

Dans des modes de mise en oeuvre particuliers de l'invention, le paramètre déterminé est compris dans la liste suivante :

- distance interpupillaire (PD) ;
- demi-distance interpupillaire (monoPD) ;
- angle pantoscopique (PA) ;
- distance verre-oeil (VD) ;
- hauteur entre le bas de la monture et le centre d'une pupille (FH) ;
- hauteur entre le bas de la monture et la paupière basse (SH) ;
- diamètre effectif des verres (ED) ;
- le chemin du regard sur chacun des verres.

Le chemin du regard, également appelé chemin de progression, correspond à la trajectoire sur le verre de l'évolution de l'intersection de la direction du regard de l'individu avec le verre, entre une direction du regard correspondant à une vision de loin et une direction du regard correspondant à une vision de près.

Connaître précisément le chemin du regard sur chacun des verres permet notamment d'adapter la position des corrections progressives en fonction de la position des yeux lors d'une vision de près et de la position des yeux regardant au loin.

Dans des modes de mise en oeuvre particuliers de l'invention, la détermination de l'angle pantoscopique est effectuée en :

- détectant les deux coins de la bouche de l'individu ;
- estimant la position 3D du point milieu entre les deux coins de la bouche ;
- déterminant la valeur de l'angle pantoscopique en calculant l'angle entre le plan formé par le point milieu et le point caractéristique de chaque pupille, et le plan des verres assemblés dans la monture sélectionnée.

Dans des modes de mise en oeuvre particuliers de l'invention, au moins un paramètre est déterminé également en fonction d'un point bas de la monture, le point bas étant compris sur une droite tangente simultanément aux deux verres.

Dans des modes de mise en oeuvre particuliers de l'invention, le procédé de détermination automatique comprend préalablement une étape de modélisation de la monture portée par l'individu.

Dans des modes de mise en oeuvre particuliers de l'invention, le procédé de détermination automatique comprend préalablement une étape de calibrage du système d'acquisition.

Dans des modes de mise en oeuvre particuliers de l'invention, le procédé de détermination automatique comprend également une étape d'envoi d'une commande de verre tenant compte du ou des paramètre(s) préalablement déterminé(s).

Dans des modes de mise en oeuvre particuliers de l'invention, le procédé de détermination automatique comprend également une étape d'adaptation d'un verre d'une paire de lunettes à partir du ou des paramètre(s) préalablement déterminé(s).

Préférentiellement, le procédé comprend également une étape d'usinage d'un verre d'une paire de lunettes à partir du ou des paramètre(s) préalablement déterminé(s).

L'invention vise également un produit programme d'ordinateur comprenant une série d'instructions permettant de mettre en oeuvre les étapes du procédé de détermination automatique selon l'un quelconque des modes de mise en oeuvre précédents.

Enfin, l'invention vise également un dispositif comprenant un écran, une pluralité de caméras, un processeur informatique et une mémoire informatique stockant ledit produit programme d'ordinateur.

Il convient de souligner que les caméras du dispositif sont généralement orientées vers l'individu se plaçant naturellement devant l'écran affichant l'image de l'individu en temps réel ou quasi-réel.

## BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :

- la figure 1 représente un exemple de dispositif de mesure d'un paramètre optique selon l'invention ;
- la figure 2 est un schéma synoptique d'un exemple de mise en oeuvre du procédé de détermination automatique selon l'invention ;
- la figure 3 illustre la définition des hauteurs dans les systèmes DATUM et BOXING ;
- la figure 4 est une représentation tridimensionnelle d'une monture et du repère associé ;
- la figure 5 illustre la différence entre le système BOXING et DATUM ;
- la figure 6 est une représentation d'une monture vue du dessus ;
- la figure 7 illustre sous la forme synoptique les étapes principales du procédé selon deux modes de mise en oeuvre de l'invention.

## DESCRIPTION DETAILLÉE DE MODES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

Exemple d'un mode de réalisation de l'invention

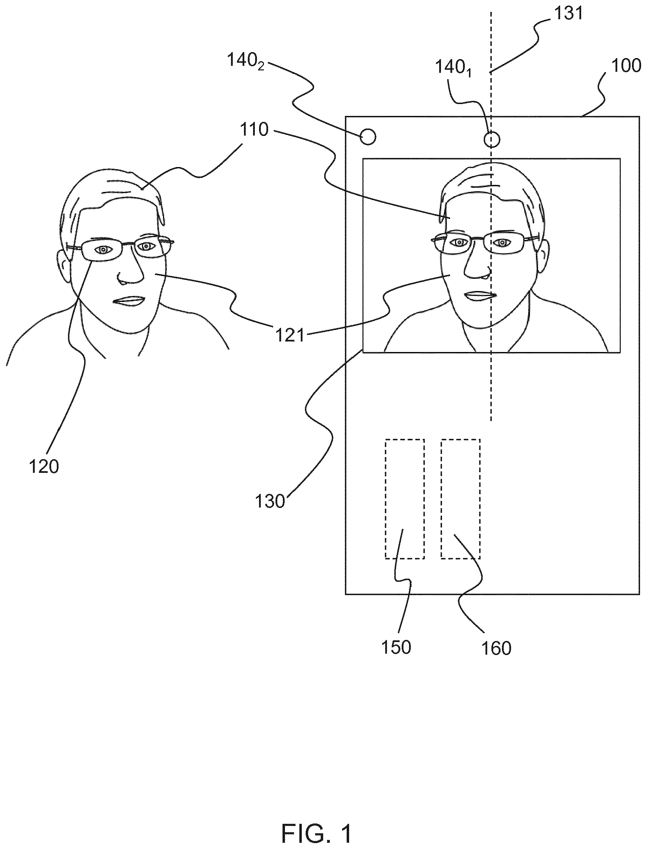

La figure 1 représente un dispositif 100 de mesure de paramètres optiques utilisé par un individu 110 portant une monture 120 d'une paire de lunettes 120 qu'il a préalablement sélectionnée dans un contexte d'achat d'équipements optiques.

Dans le présent exemple, le dispositif 100 comprend un écran d'affichage 130 placé sensiblement dans le plan vertical et un système d'acquisition comportant au moins deux caméras 140. L'une des deux caméras 140, appelée caméra principale $140_1$, est centrée sur l'axe médian vertical 131 de l'écran d'affichage, tandis que l'autre caméra $140_2$ est dans le même plan vertical que la caméra principale $140_1$ mais décalée horizontalement vers la gauche de l'écran 130.

La caméra principale $140_1$ filme l'image de l'individu 110 positionné face à l'écran 130. L'individu 110 voit ainsi son image s'afficher à l'écran 130.

La deuxième caméra $140_2$ avantageusement décalée horizontalement permet d'obtenir après traitement avec les images obtenues par la caméra principale une représentation tridimensionnelle de la scène, également appelée image stéréoscopique. Une telle image stéréoscopique est par exemple obtenue lorsque le décalage horizontal est de l'ordre du centimètre ou d'une dizaine de centimètre.

Cette représentation tridimensionnelle peut être améliorée en ajoutant d'autres caméras, comme par exemple une troisième caméra positionnée symétriquement par rapport à l'axe médian 131.

Les caméras 140 peuvent être avantageusement sensibles à l'infrarouge afin à la fois de voir les pupilles au travers de verres solaires non polarisés et de limiter le nombre de reflets sur n'importe quel type de verre, facilitant ainsi le repérage des pupilles.

D'autre part, les caméras 140 peuvent également comprendre un filtre polarisant positionné devant leur objectif afin de voir les pupilles au travers de verres polarisés, notamment solaires.

Il convient de souligner que le système d'acquisition est avantageusement calibré, c'est-à-dire que les images de la scène fournies par les caméras 140 permettent d'obtenir une représentation métrique de la scène.

Le dispositif 100 comprend également un processeur informatique 150 traitant les instructions d'un produit programme d'ordinateur mettant en oeuvre le procédé de détermination automatique d'au moins un paramètre optique associé à la monture 120 portée par l'individu 110. Ces instructions sont notamment stockées dans une mémoire 160 incluse dans le dispositif 100.

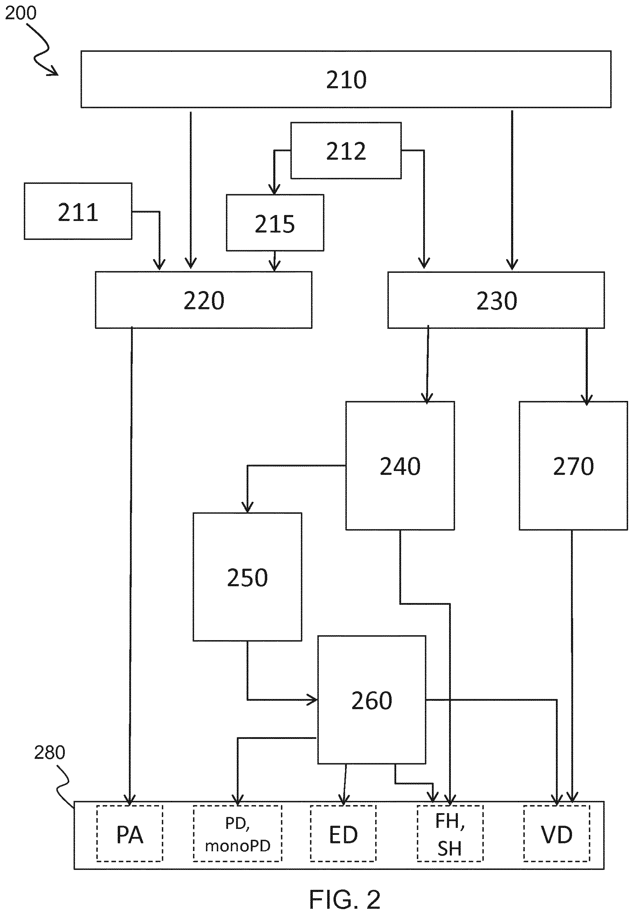

La figure 2 illustre sous la forme d'un schéma synoptique le procédé 200 de détermination automatique dont les étapes sont traitées par le processeur informatique 150 du dispositif 100.

Le procédé comprend une première étape 210 d'acquisition d'une pluralité d'images de l'individu 110 portant la monture 120. Au moins une image par caméra 140 est acquise au cours de cette étape 210.

Il convient de souligner que les images acquises par chaque caméra 140 sont calibrées métriquement. Un calibrage a ainsi généralement été réalisé en amont de l'acquisition des images au cours d'une étape 211.

Par ailleurs, la monture sélectionnée 120 a également été préalablement modélisée au cours d'une étape 212 par des techniques de modélisation bien connues de l'homme du métier, comme par exemple celle décrite dans la demande de brevet internationale publiée sous le numéro WO 2013/139814. Une représentation tridimensionnelle de la monture sélectionnée, également appelée monture virtuelle est ainsi stockée dans une base de données connectée au dispositif 100. Il convient de souligner que les dimensions de la représentation tridimensionnelle sont fidèles à la monture réelle. Elles sont ainsi précises avec un écart inférieur à 1 mm, avantageusement inférieur à 0,5 mm, préférentiellement inférieur à 0,2 mm. Par ailleurs, la représentation virtuelle de la monture sélectionnée est extraite de la base de données soit automatiquement en détectant et en reconnaissant la monture 120 portée par l'individu 110, soit manuellement en indiquant la référence de la monture 120 par exemple par une lecture d'un code-barres ou par une saisie sur un clavier physique ou sur un clavier s'affichant à l'écran 130.

A partir des images acquises, la monture sélectionnée 120 est détectée au cours d'une étape 215 de détection en utilisant par exemple des techniques connues de détection d'objets basées sur des descripteurs visuels. Ces méthodes de détection s'appuyant sur une technique d'apprentissage donnent *a minima* une position et une échelle de l'objet. L'apprentissage peut être effectué sur des images de montures de paires de lunettes ou sur des images de visage portant une monture d'une paire de lunettes. Il est également possible d'obtenir une position et une échelle suffisamment précise pour procéder à l'étape suivante d'alignement de l'objet 3D dans l'image 2D, en utilisant uniquement un détecteur de visage. Par ailleurs, il existe également des détecteurs, comme celui décrit dans « Deep MANTA: A Coarse-to-fine Many-Task Network for joint 2D and 3D vehicle analysis from monocular image, F. Chabot, M. Chaouch, CVPR 2017 », qui peuvent donner des solutions initiales de positionnement dans l'espace 3D des éléments recherchés..

Dans une variante de ce mode de mise en oeuvre particulier de l'invention, la détection de la monture portée 120 par l'individu 110 est effectuée en comparant l'image acquise avec une image de l'individu 120 ne portant pas de monture de paire de lunettes sur le visage.

À partir des images acquises dans lesquelles la monture sélectionnée 120 est détectée au cours de l'étape 215, une estimation de la position tridimensionnelle de la monture 120 par rapport à la caméra principale $140_1$ est effectuée au cours de l'étape 220 du procédé 200 en utilisant la monture virtuelle qui représente fidèlement la monture réelle en trois dimensions. La position tridimensionnelle de la monture sélectionnée 120, c'est-à-dire rotation $R_M$ et translation $T_M$ de l'objet dans la scène 3D, peut être obtenue manuellement par un recalage de la représentation tridimensionnelle de la monture sélectionnée sur la monture sélectionnée réellement portée dans l'image acquise de l'individu 110 ou automatiquement grâce à un algorithme d'alignement d'objets 3D sur des images en initialisant l'algorithme au niveau des yeux de l'individu 110. Pour un tel algorithme, l'homme du métier peut par exemple se référer au document de Yumi Iwashita, Ryo Kurazume et Kenji Hara intitulé « Fast Alignment of 3D Geometrical Models and 2D Color Images using 2D Distance Maps ». L'homme du métier peut également se référer au document de T.W. Drummond et R. Cipolla intitulé « Real-time tracking of complex structures with on-line caméra calibration » publié en 2002 dans le recueil *Image and Vision Computing*.

Il convient de souligner que la représentation tridimensionnelle de la monture peut être amenée à être articulée et/ou déformée au cours de cette étape afin de tenir compte de l'ouverture réelle des branches de la monture telle que portée par l'individu 110.

A cet effet, une équation de minimisation basée sur le contour du modèle de la monture est utilisée. Soient $gl3D_{l=1..p}$ les points 3D de ce modèle, $ngl3D_{l=1..p}$ leur normale et $\sigma^i$ le sous-ensemble de ces points tels que leur normale soit perpendiculaire avec leur projection vers la caméra i, la fonction à minimiser est la suivante :

$$\min_{Rg,Tg,\theta,\gamma} \sum_{i=1}^{n} \sum_{l \in \sigma^i} \left\| Proj^i(Rg(G(gl3D_l, \theta, \gamma)) + Tg) - bestCont(gl3D_l, ngl3D_l, i, Rg, Tg, \theta, \gamma) \right\|_2$$

où $Rg$ et $Tg$ sont les matrices de rotation et de translation pour bien positionner la paire et où $G(gl3D_l, \theta, \gamma)$ est une fonction de déformation de paramètres $\theta$ et $\gamma$ contrôlant l'ouverture des branches ($\theta$) et leur torsion ($\gamma$) en fonction de la position du point à déformer. La fonction $bestCont()$ renvoie un point de l'image correspondant au point ayant la norme de gradient le plus élevé le long d'un segment centré en la projection du point 3D du modèle de la monture dans l'image. La direction le long du segment est donnée par la projection de la normale du point 3D. Un mode multi-hypothèses tel que celui décrit dans « Combining Edge and Texture Information for Real-Time Accurate 3D Caméra Tracking, Vacchetti, V. Lepetit, P. Fua, Third IEEE and ACM International Symposium on Mixed and Augmented Reality, 2004 » permet de garder les points avec les valeurs de gradient les plus forts et de sélectionner le meilleur.

Parallèlement, le procédé 200 comprend une étape 230 d'estimation de la position tridimensionnelle du centre des pupilles en combinant les images acquises simultanément par au moins deux caméras 140. Cette stéréovision permet notamment d'obtenir la position 3D des yeux sans nécessiter une estimation de la distance verre-oeil $VD$.

En effet, en utilisant le calibrage du système d'acquisition d'images du dispositif 100 qui comprend une pluralité de caméras 140 et la position 2D des centres des pupilles dans chacune des images acquises, le principe de stéréovision basé notamment sur une triangulation en utilisant la géométrie épipolaire, permet d'obtenir la position 3D des centres des pupilles dans le repère utilisé pour le calibrage des caméras.

Dans des variantes de ce mode de réalisation particulier de l'invention, le système d'acquisition d'images comprend une caméra de profondeur qui permet d'obtenir la position 3D des yeux et par conséquent du centre des pupilles, dans le repère du système d'acquisition d'images.

Il convient de souligner que la position 2D du centre des pupilles a été préalablement déterminée soit manuellement par un opticien, soit automatiquement à l'aide d'un détecteur de points caractéristiques du visage. La détection automatique des pupilles est par exemple mise en oeuvre par l'utilisation d'une méthode de recherche du contour de la pupille, le centre d'une pupille étant par la suite déterminé comme étant le centre d'une ellipse représentative de la pupille détectée.

Ainsi, la détection automatique des pupilles dans l'image peut par exemple s'effectuer par l'intermédiaire d'une détection automatique des iris qui est plus facile à détecter. La détection automatique des iris peut s'initialiser à l'aide d'un détecteur de visage qui permet de détecter les coins des yeux ou un centre approximatif de chaque iris, mais il peut aussi s'initialiser à l'aide d'un détecteur de lunettes qui permet de déterminer la zone des yeux. La position du centre d'une pupille étant supposée égale au centre de l'iris, il s'agit alors de retrouver la position, l'orientation et la dimension d'un cercle dans l'espace tridimensionnel telle que la projection du cercle dans chacune des images coïncident avec l'iris qui s'apparente à une ellipse dans l'image. La paire de lunettes ayant été préalablement positionnée, la zone de recherche de l'iris encerclé par la monture de la paire de lunettes est relativement restreinte ce qui permet de limiter la probabilité d'un faux positif. Les paramètres à estimer sont le rayon du cercle, la position du centre du cercle et l'orientation du cercle par rapport à son centre. Étant donné que le cercle est plan et symétrique dans le plan par rapport à son centre, deux paramètres suffisent pour caractériser l'orientation du cercle dans l'espace tridimensionnel. Six valeurs de paramètres sont ainsi à estimer. Le cercle est initialisé avec un rayon moyen d'iris et tel que son centre se projette au niveau des centres des verres dans l'image. Ensuite, une technique basée sur une carte de distance ou sur une distance entre le modèle de contour et le contour image permet de retrouver précisément le rayon, la position et l'orientation du cercle dans l'espace 3D. Un échantillonnage de points 3D sur ce cercle est projeté dans l'image acquise. Le cercle étant un objet plan dans l'espace 3D, ses normales en chaque point échantillonné sont définies par les droites passant par les points et le centre du cercle. On considère les normales toujours visibles car l'objet cercle est plan et que les iris de l'utilisateur sont toujours visibles. La fonction de coût à minimiser est une somme de carrés de distance entre les projections des points et la fonction $bestCont()$.

Afin de simplifier les calculs des mesures oculaires, la position de chaque pupille est exprimée au cours de l'étape 240 dans le repère de la monture virtuelle à partir de la position 3D de la monture et de la position 3D du centre des pupilles.

La position 3D des centres des pupilles dans le repère de la monture est caractérisée pour chaque oeil par :

$$PG3D = R_M^{-1}(PG3D0 - T_M) \text{ et } PD3D = R_M^{-1}(PD3D0 - T_M)$$

où $PG3D0$ et $PD3D0$ sont les coordonnées 3D des centres respectifs de la pupille gauche et droite dans le repère du calibrage précédemment déterminé.

Le procédé 200 comprend ensuite une étape 250 au cours de laquelle la position 3D des centres des globes oculaires est calculée et exprimée dans le repère de la monture.

À cet effet, dans le cas où l'image est acquise alors que l'individu 110 regarde la caméra centrale $140_1$ qui est considérée comme étant en face de l'individu 110, la position de la caméra centrale $140_1$ est alors représentative du point de visée des yeux de l'individu 110. Chaque centre de rotation d'un oeil (PCOG3D et PCOD3D) se trouve alors sur la droite passant par chacun des centres des pupilles et le point de visée à une distance du centre de la pupille qui se trouve être le rayon moyen d'un globe oculaire auquel est retranché la taille d'une cornée. Il convient de souligner que le point de visée peut être légèrement différent pour chaque oeil de l'individu 110.

La détermination du point de visée peut être définie selon un protocole durant lequel l'individu 110 regarde tout ou partie des points suivants :

- la caméra située en face de l'individu ;
- une caméra secondaire ;
- un point affiché à l'écran ;
- un point de l'écran situé en haut à droite ;
- un point de l'écran situé en bas à gauche.

Il convient de souligner que, dans ce protocole, la position de l'écran est connue par rapport au système d'acquisition d'images comprenant les caméras.

Dans des variantes de mise en oeuvre de cette étape, l'individu 110 regarde d'autres points de visée tels qu'une caméra qui n'est pas en face de l'individu ou une image de son visage se reflétant sur un miroir situé à proximité de l'écran 130, préférentiellement dans le plan de l'écran 130, et dont la position par rapport aux moyens d'acquisition d'images est connue. Le miroir peut également avantageusement correspondre à la position de la caméra principale $140_1$, en entourant par exemple la caméra principale $140_1$. Il est alors nécessaire d'ajouter une étape intermédiaire consistant à faire intervenir la position 3D du point visé qui est utilisé pour corriger :

- la position du centre de rotation du globe oculaire (qui se trouve sur l'axe point de visée/centre de pupille). En d'autres termes, la position du centre de rotation du globe oculaire est induite par la position 3D du point de visée et par le centre de la pupille ;
- la trajectoire du regard en la simulant de face pour le calcul du centre optique qui est effectué ultérieurement au cours de l'étape 260 du procédé 200.

Dans le cas où l'image est acquise alors que le point de visée de l'individu est inconnu, il est possible de retrouver la position du centre de rotation de chaque globe oculaire à partir du cercle calculé pour chaque iris lors de l'étape 230 d'estimation de la position tridimensionnelle du centre des pupilles. En considérant un rayon moyen de globe oculaire, il est alors possible de déterminer un centre de rotation de chaque oeil en calculant la position du centre d'une sphère de rayon égal au rayon moyen de globe oculaire et pour laquelle l'iris représente un plan de coupe. Il convient de souligner que le centre de rotation du globe moyen correspond pour chaque oeil à la solution située à l'intérieur du crâne. Il est également possible de retrouver la position du centre de rotation de chaque globe en considérant comme modèle simplifié d'oeil un cercle représentant l'iris se situant à une distance donnée, comme par exemple la valeur moyenne d'un rayon d'un globe oculaire standard ou adapté à la déformation relative à la correction, moins l'épaisseur d'une cornée (i.e. la distance entre l'apex de la cornée et l'iris). La position du centre de rotation est alors déterminée en résolvant la position de ce modèle simplifié sur les images acquises par un procédé décrit par exemple dans la demande internationale publiée sous le numéro WO 2013/045531.

Au cours de l'étape 260, les centres d'optique des verres (*PCOVG3D* et *PCOVD3D,* exprimés dans le repère de la monture) sont donnés par l'intersection entre chacun des verres et la droite passant par le centre de rotation de l'œil correspondant et son point de visée.

Le diamètre effectif (*ED* / Effective Diameter), peut alors être obtenu en multipliant par deux la distance entre le centre optique d'un verre (*PCOVG3D* et *PCOVD3D*) et le point 3D le plus éloigné appartenant au même groupe de verre.

Parallèlement, le procédé 200 comprend une étape 270 au cours de laquelle la position 3D des points bas des pupilles et de chaque cercle entourant les verres de la monture est calculée dans le repère de la monture en fonction de la position 3D de la monture et du centre des pupilles.

Le calcul des positions effectué au cours de l'étape 270 est basé sur une méthode similaire à celle du calcul de la position 3D des centres des pupilles effectué au cours de l'étape 230. Il est ainsi possible d'estimer :

- la position 3D des points les plus bas sur chaque pupille (si la pupille est recouverte par la paupière inférieure, il s'agira du point le plus bas visible, sur la limite pupille/paupière). La détection de ces points dans les images acquises peut être automatisée en entraînant un détecteur sur les pupilles ou en s'appuyant sur l'image des contours au niveau de la pupille qui doit former un cercle.

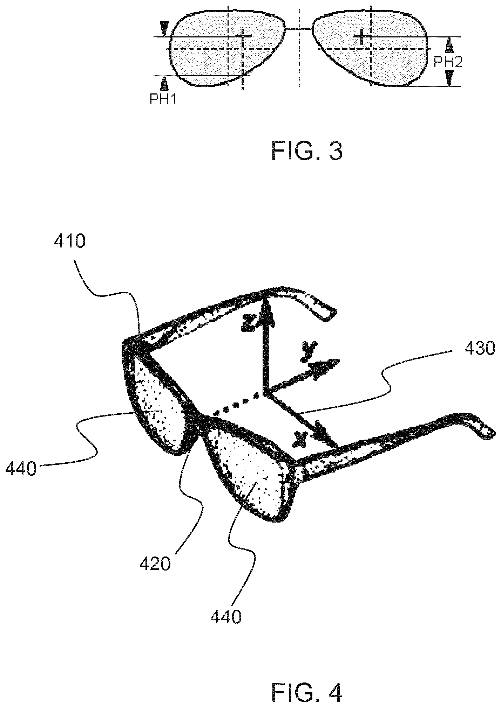

- la position 3D des points « bas de la monture » au niveau de chaque verre de la monture. Pour déterminer ces points « bas de la monture », il s'agit du point le plus bas du groupe composant chacun des verres en 3D pour le système de montage BOXING et du point le plus bas du groupe composant chacun des verres en 3D qui se situe à la verticale de chaque centre optique pour le système DATUM. Ces points seront utiles au calcul des hauteurs PH1 dans le cas du système DATUM ou PH2 dans le cas du système BOXING, comme illustré en figure 3.

Il convient de souligner que la détection de ces points dans le système BOXING n'est pas forcément à réaliser dans les images acquises car ces points peuvent être repérés au préalable sur la modélisation 3D de la monture.

Le procédé 200 comprend au final une étape 280 de calcul des mesures oculaires. Les distances verre-oeil (gauche et droit) se trouvent être les distances euclidiennes entre les centres des iris et leur projection sur chacun des verres :

$$DVOG = \|PG3D - PCOVG3D\|_2 \text{ et } DVOD = \|PD3D - PCOVD3D\|_2$$

La distance pupillaire (PD) est donnée par :

$$PD = \|PCOG3D - PCOD3D\|_2$$

A partir des coordonnées du centre des pupilles de l'individu 110 déterminées au cours de l'étape 230, soient (xPG, yPG, zPG) les coordonnées 3D du centre de la pupille gauche dans le repère de la monture et (xPD, yPD, zPD) les coordonnées 3D du centre de la pupille droite.

Il convient de souligner, comme illustré en figure 4, que le centre du repère de la monture 410 se situe au centre du pont 420 de la monture 410 et correspond à l'origine de l'axe 430 en x défini comme l'axe passant par les deux verres 440.

Les demi écarts pupillaires (monoPD) sont donnés par :

$$monoPDG = -xPG$$

$$monoPDD = xPD$$

A partir des coordonnées 3D du bas des pupilles et du bas des montures déterminées dans le repère de la monture au cours de l'étape 270, soient (xPdownG,yPdownG,zPdownG) les coordonnées 3D du bas de la pupille gauche, (xPdownD,yPdownD,zPdownD) les coordonnées 3D du bas de la pupille droite, (xMG,yMG,zMG) les coordonnées 3D du bas de la monture au niveau du verre gauche et (xMD,yMD,zMD) les coordonnées 3D du bas de la monture au niveau du verre droit.

Les hauteurs (FH) sont données par :

$$FHG = zMG - zPG + DrageoirOffset$$

$$FHD = zMD - zPD + DrageoirOffset$$

Les hauteurs des segments (SH) sont données par :

$$SHG = zMG - zPdownG + DrageoirOffset$$

$$SHD = zMD - zPdownD + DrageoirOffset$$

où DrageoirOffset représente la profondeur du drageoir de la monture choisie par le patient. Cette valeur est renseignée en fonction du type de matériau de la monture ou directement récupérée depuis la modélisation 3D de la monture.

Enfin l'angle pantoscopique est directement donné par l'angle formé par le plan des verres de la monture et le plan vertical dans l'image acquise de l'individu 110, si l'individu 110 adopte une posture naturelle pour une vision de loin, c'est-à-dire une direction de regard horizontale, ou orientée vers l'horizon.

Dans le cas où l'acquisition est réalisée sans que l'individu ne puisse adopter une posture naturelle pour une vision de loin comme c'est par exemple le cas lorsque l'individu 110 regarde un point trop haut qui l'oblige à lever sa tête, l'estimation de l'angle pantoscopique peut être effectuée de deux manières :

1. Détecter les coins de la bouche sur les images de l'individu et ainsi estimer la position 3D du milieu de ces deux coins de bouche ; considérer le plan passant par ce point 3D estimé et les milieux des pupilles ; estimation de l'angle pantoscopique en mesurant l'angle formé par ce plan et le plan des verres de la monture sélectionnée.
2. Utiliser l'angle pantoscopique mesurable lors de la numérisation de la monture sélectionnée en la posant sur un mannequin ou en positionnant la représentation tridimensionnelle de la monture sélectionnée sur un avatar virtuel moyen représentant une tête moyenne d'un individu.

Il convient de souligner que le mannequin peut être sélectionné entre plusieurs mannequins en fonction de la morphologie de l'individu, notamment celui ayant la morphologie se rapprochant le plus de celle de l'individu.

Dans une variante de mise en oeuvre de ce mode particulier de mise en oeuvre de l'invention, la paire de lunettes sélectionnée par l'individu n'est pas accessible physiquement lors de l'utilisation du dispositif de mesure de paramètres optiques. Dans ce cas, compte-tenu qu'une représentation tridimensionnelle de la monture de la paire de lunettes sélectionnée par l'individu est stockée dans la base de données, l'individu utilise le dispositif de mesure en portant une deuxième paire de lunettes qui est à disposition de l'individu et qui sert de référence pour la détermination du ou des paramètre(s). Il convient de souligner qu'une représentation tridimensionnelle fidèle de la monture de la deuxième paire de lunettes est également stockée dans la base de données accessible au dispositif de mesure.

Dans cette variante, le procédé de détermination automatique d'au moins un paramètre, mis en oeuvre par le dispositif de mesure, permet d'obtenir la position 3D de la paire de lunettes portée et des centres de rotation des yeux (*PCOG3D et PCOD3D*) dans l'image acquise ainsi que les valeurs de PD et monoPD qui ne sont pas dépendantes de la paire de lunettes portée.

Afin que les autres paramètres, notamment FH, SH, PA, VD et ED, soient liés à la paire de lunettes sélectionnée et non à la paire de lunettes portée, le procédé de détermination comprend également une étape de détermination d'un décalage de positionnement entre la monture de la paire de lunettes portée par rapport à la monture de la paire de lunettes sélectionnée. La détermination du décalage s'effectue en superposant les représentations tridimensionnelles des deux montures sur un modèle tridimensionnel d'un visage. Il convient de souligner que le modèle tridimensionnel d'un visage peut être représentatif du visage de l'individu. Ce modèle tridimensionnel de visage peut être élaboré à partir d'images du visage de l'individu ou sélectionné à partir d'un avatar virtuel en fonction de la morphologie type de l'individu. Cette sélection s'effectue par exemple par l'intermédiaire de la valeur du PD seule, voire d'une valeur de configuration dépendant du PD et de la distance minimum entre les paramètres d'écartement des branches obtenus sur l'utilisateur et les valeurs obtenues sur les mannequins de référence. Cette valeur de configuration peut être par exemple obtenue sur des mannequins réels par mesure de l'alignement 3D sur image, ou par simulation physique de la paire 3D sur des mannequins virtuels (cf. par exemple la demande de brevet international publiée sous le numéro WO 2016/135078).

Dès lors que le décalage de positionnement est déterminé selon les trois axes, la représentation tridimensionnelle de la monture sélectionnée est positionnée dans le repère du système d'acquisition d'images par rapport à la représentation tridimensionnelle de la monture portée par l'individu par l'intermédiaire du décalage de positionnement entre les deux montures. Ainsi, l'expression de la position de chaque pupille dans le repère de la représentation tridimensionnelle de la monture sélectionnée peut être effectuée et permet de déterminer les valeurs des paramètres FH, SH, PA, VD et ED à partir de la position relative des yeux par rapport à la représentation tridimensionnelle de la monture sélectionnée.

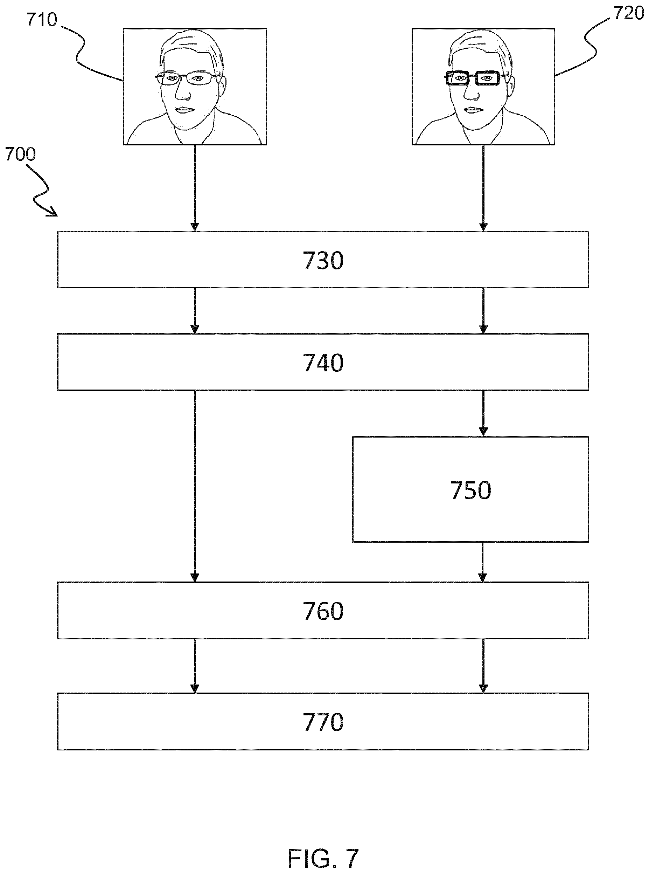

En résumé, la figure 7 illustre sous la forme d'un schéma synoptique les étapes principales du procédé 700 de détermination automatique mise en oeuvre soit à partir d'une image 710 de l'individu portant la monture sélectionnée sur le visage, soit à partir d'une image 720 de l'individu portant la deuxième monture sur le visage.

Dans les deux cas, le procédé 700 comprend les étapes de :

- 730, détection d'au moins un point caractéristique d'au moins un oeil de l'individu sur l'image acquise et estimation dans le repère du système d'acquisition d'images, de la position tridimensionnelle du ou des point(s) caractéristique(s) détecté(s) ;
- 740, détection de la monture portée et estimation de la position tridimensionnelle de la monture portée dans le repère du système d'acquisition d'images en alignant la représentation tridimensionnelle de la monture portée avec la monture portée dans l'image acquise.

Dans le cas où la monture portée est la monture de la deuxième paire de lunettes, le procédé 700 comprend une étape supplémentaire 750 de positionnement de la représentation tridimensionnelle de la monture sélectionnée, la représentation de la monture sélectionnée étant positionnée par rapport à la représentation de la monture portée par l'intermédiaire du décalage de positionnement entre les deux montures.

Enfin dans les deux cas, la position de chaque point caractéristique est exprimée par rapport à la représentation tridimensionnelle de la monture sélectionnée, au cours de l'étape 760, préférentiellement dans le repère de la représentation tridimensionnelle de la monture sélectionnée.

Au moins un paramètre associé à la monture sélectionnée est ensuite déterminé à partir de la position relative des yeux par rapport à la représentation tridimensionnelle de la monture sélectionnée au cours de l'étape 770.

Dans des variantes optionnelles de mise en oeuvre de l'invention, au moins une image de l'individu ne portant pas de lunettes sur le visage est acquise par les caméras 140 du système d'acquisition d'images afin de faciliter les calculs effectués au cours du procédé 700.

À partir de cette ou de ces image(s) de la tête de l'individu sans lunettes, un meilleur modèle tridimensionnel du visage peut être élaboré, permettant d'estimer plus précisément la position des points caractéristiques du visage par rapport à la représentation de la paire de lunettes portée dans le repère du système d'acquisition d'images.

À cet effet, le modèle du visage sans lunettes est positionné dans l'espace du système d'acquisition d'images en alignant le modèle du visage sans lunettes avec l'image du visage avec lunettes, ce qui permet d'obtenir un positionnement plus réaliste du visage de l'individu et de corriger la position estimée des yeux et notamment celle du centre de rotation de chaque oeil dans le repère de la représentation tridimensionnelle de la monture sélectionnée.

En d'autres termes, l'alignement du modèle du visage correspond à un positionnement et une orientation dudit modèle dans le repère du système d'acquisition d'images grâce à des paramètres réels de positionnement et d'orientation du visage de l'individu préalablement déterminés par rapport au système d'acquisition d'images.

Ainsi, la détermination d'au moins un paramètre est effectuée de manière plus rapide et plus précise.

En outre, la connaissance du visage sans lunettes permet de s'affranchir des perturbations induites par les verres de la paire de lunettes réellement portée, notamment si les verres présentent une coupure en longueur d'onde ou si les verres comprennent une correction optique apportant une réfraction non négligeable.

Avantages de l'invention

Un premier avantage du procédé de détermination automatique d'un paramètre optique est la précision de la mesure. En effet, aucune intervention manuelle n'est nécessaire pour calculer les mesures oculaires sur un nombre important d'images. Il est ainsi possible d'avoir une confiance élevée à propos des mesures effectuées par le procédé de détermination automatique.

Contrairement aux systèmes existants, dont la précision de la mesure est fonction du positionnement et de l'orientation de la tête du patient, le procédé objet de la présente invention permet de reconstruire le système « yeux + lunettes » en 3D. Ceci a pour avantage de récupérer les mesures oculaires dans la position d'acquisition de la tête du patient, qui peut être sa position naturelle et si ce n'est pas le cas, une correction des mesures peut être effectuée en simulant le système 3D « yeux + lunettes » de l'utilisateur avec un regard différent et une orientation de la tête différente.

Grâce à la reconstruction 3D du système « yeux + lunettes » du patient, il est possible de :

- calculer les mesures oculaires en vision de loin puis estimer ces mesures oculaires en vision de près en réalisant une simulation du système avec un point de visée plus proche ;
- calculer les mesures oculaires en vision de près puis estimer ces mesures oculaires en vision de loin en réalisant une simulation du système avec un point de visée plus proche ;
- calculer le chemin du regard sur chaque verre en réalisant une simulation du système avec un ensemble de points de visée proche et loin ;
- mesurer le strabisme d'un oeil à partir de plusieurs images de l'individu regardant un point à la distance de lecture (environ 20 cm), un point à l'infini et un point à une distance intermédiaire.

Autres caractéristiques optionnelles de l'invention

Dans des variantes de mise en oeuvre de l'invention, la mesure de la distance interpupillaire (PD) peut être effectuée par l'intermédiaire d'au moins deux images de l'individu ne portant pas de paire de lunettes sur le visage, les images étant acquises simultanément ou quasi-simultanément par deux caméras distinctes du dispositif. Il convient de rappeler que les images acquises par les caméras sont calibrées.

**Revendications**

1. Procédé, mis en oeuvre par ordinateur, de détermination automatique d'au moins un paramètre associé à un dispositif ophtalmique sélectionné par un individu, ledit dispositif comprenant une monture appelée monture sélectionnée, ladite détermination étant effectuée à partir d'une image du visage de l'individu portant une monture d'un dispositif ophtalmique, appelée monture portée, ladite monture portée étant une monture d'un deuxième dispositif ophtalmique, ladite image étant acquise par un système d'acquisition d'images, le système d'acquisition d'images étant calibré métriquement, le procédé comprenant les étapes de :

   - détection d'au moins un point caractéristique d'au moins un oeil de l'individu sur l'image acquise et estimation dans le repère du système d'acquisition d'images, de la position tridimensionnelle du ou des point(s) caractéristique(s) détecté(s), l'estimation de ladite position tridimensionnelle étant effectuée soit par triangulation de la position 2D du ou des point(s) caractéristique(s) dans chacune des images acquises simultanément de manière stéréoscopique par au moins deux caméras du système d'acquisition d'images, soit en utilisant une caméra de profondeur du système d'acquisition d'images ;
   - détection de la monture portée et estimation de la position tridimensionnelle de la monture portée dans le repère du système d'acquisition d'images en alignant une représentation tridimensionnelle de la monture portée avec la monture portée dans l'image acquise ;
   - positionnement, dans le repère du système d'acquisition d'images, d'une représentation tridimensionnelle de la monture sélectionnée, la représentation de la monture sélectionnée étant positionnée par rapport à la représentation de la monture portée par l'intermédiaire d'un décalage de positionnement entre les deux montures, ledit décalage étant préalablement établi ;
   - expression de la position de chaque point caractéristique par rapport à la représentation tridimensionnelle de la monture sélectionnée ;
   - détermination du ou des paramètre(s) à partir de la position relative du ou des point(s) caractéristique(s) de l'œil ou des yeux par rapport à la représentation tridimensionnelle de la monture sélectionnée.

2. Procédé selon la revendication 1, **caractérisé en ce que** l'estimation de la position tridimensionnelle de la monture portée est effectuée en calculant le minimum d'une fonction de distance entre le contour de la projection de la représentation tridimensionnelle de la monture portée et le contour de la monture portée dans l'image acquise, la représentation tridimensionnelle de la monture portée pouvant être articulée et/ou déformée.

3. Procédé selon l'une quelconque des revendications 1 à 2, **caractérisé en ce que** le point caractéristique d'un oeil est le centre de sa pupille qui est calculé comme le centre d'un cercle représentant l'iris, ledit cercle étant positionné et orienté en trois dimensions en calculant le minimum d'une fonction de distance entre la projection du cercle et le contour de la pupille sur la ou les image(s) acquise(s) simultanément.

4. Procédé selon la revendication 3, **caractérisé en ce que** la position du centre du globe oculaire d'un oeil est calculée :

   - dans le cas où le point de visée dudit oeil est connu, comme égal au point situé sur la droite définie par le centre de la pupille dudit oeil et ledit point de visée, à une distance égale au rayon moyen d'un globe oculaire ;
   - dans le cas où le point de visée dudit oeil est inconnu, comme égale au centre d'une sphère de rayon égal au rayon moyen de globe oculaire et pour laquelle l'iris représente un plan de coupe.

5. Procédé selon la revendication 4, **caractérisé en ce qu'**il comprend également des étapes de :

   - détermination de la position 3D du point de visée ;
   - correction de la position du centre de rotation du globe oculaire à partir de la position 3D du point de visée préalablement déterminée.

6. Procédé selon l'une quelconque des revendications 1 à 5, **caractérisé en ce qu'**il comprend également une étape de détermination du décalage de positionnement entre la représentation tridimensionnelle de la monture sélectionnée et la représentation tridimensionnelle de la deuxième monture portée par l'individu, en positionnant les deux représentations tridimensionnelles sur un modèle tridimensionnel représentatif d'un visage.

7. Procédé selon l'une quelconque des revendications 1 à 6, **caractérisé en ce que** le procédé comprend également une étape d'élaboration d'un modèle tridimensionnel du visage de l'individu sans lunettes à partir d'au moins une image du visage de l'individu sans lunettes acquise préalablement, un alignement du modèle du visage sans lunettes avec une image du visage de l'individu avec lunettes étant effectué pour estimer la position des points caractéristiques par rapport à la représentation tridimensionnelle de la monture portée.

8. Procédé selon l'une quelconque des revendications 1 à 7, **caractérisé en ce que** le système d'acquisition d'images est stéréoscopique et/ou comprend au moins une caméra infrarouge.

9. Procédé selon l'une quelconque des revendication 1 à 8, **caractérisé en ce que** tout ou partie des caméras du système d'acquisition d'images est calibré métriquement.

10. Procédé selon l'une quelconque des revendications 1 à 9, **caractérisé en ce que** le paramètre déterminé est compris dans la liste suivante :

- distance interpupillaire (PD) ;
- demi-distance interpupillaire (monoPD) ;
- angle pantoscopique (PA) ;
- distance verre-oeil (VD) ;
- hauteur entre le bas de la monture et le centre d'une pupille (FH) ;
- hauteur entre le bas de la monture et la paupière basse (SH) ;
- diamètre effectif des verres (ED) ;
- chemin du regard, également appelé chemin de progression.

11. Procédé selon la revendication 10, **caractérisé en ce que** la détermination de l'angle pantoscopique est effectuée en :

- détectant les deux coins de la bouche de l'individu ;
- estimant la position 3D du point milieu entre les deux coins de la bouche ;
- déterminant la valeur de l'angle pantoscopique en calculant l'angle entre le plan formé par le point milieu et le point caractéristique de chaque pupille, et le plan des verres assemblés dans la monture sélectionnée.

12. Procédé selon l'une quelconque des revendications 1 à 11, **caractérisé en ce qu'**au moins un paramètre est déterminé également en fonction d'un point bas de la monture, le point bas étant compris sur une droite tangente simultanément aux deux verres.

13. Procédé selon l'une quelconque des revendications 1 à 12, **caractérisé en ce qu'**il comprend également une étape d'envoi d'une commande de verre tenant compte du ou des paramètre(s) préalablement déterminé(s) et/ou une étape d'usinage d'un verre d'une paire de lunettes à partir du ou des paramètre(s) préalablement déterminés.

14. Produit programme d'ordinateur comprenant une série d'instructions de code de programme pour l'exécution des étapes du procédé de détermination automatique selon l'une quelconque des revendications 1 à 13, lorsque ledit programme est exécuté sur un ordinateur.

15. Dispositif comprenant un écran, une pluralité de caméra, un processeur informatique et une mémoire informatique stockant le produit programme d'ordinateur selon la revendication 14.

**Patentansprüche**

1. Computerimplementiertes Verfahren zum automatischen Bestimmen mindestens eines Parameters, der mit einer von einer Person ausgewählten ophthalmologischen Vorrichtung verbunden ist, wobei die Vorrichtung ein Brillengestell umfasst, das ausgewähltes Brillengestell genannt wird, wobei das Bestimmen anhand eines Bilds des Gesichts der Person, die ein Brillengestell einer ophthalmologischen Vorrichtung trägt, das getragenes Brillengestell genannt wird, durchgeführt wird, wobei das getragene Brillengestell ein Brillengestell einer zweiten ophthalmologischen Vorrichtung ist, wobei das Bild durch ein Bilderfassungssystem erfasst wird, wobei das Bilderfassungssystem metrisch kalibriert wird, wobei das Verfahren die folgenden Schritte umfasst:

- Erkennen mindestens eines charakteristischen Punkts mindestens eines Auges der Person auf dem erfassten Bild und Schätzen der dreidimensionalen Position des erfassten charakteristischen Punkts bzw. der erfassten charakteristischen Punkte im Koordinatensystem des Bilderfassungssystems, wobei das Schätzen der dreidimensionalen Position entweder durch Triangulation der 2D-Position des charakteristischen Punktes bzw. der charakteristischen Punkte in jedem der Bilder, die gleichzeitig stereoskopisch von mindestens zwei Kameras des Bilderfassungssystems erfasst werden, oder unter Verwendung einer Tiefenkamera des Bilderfassungssystems durchgeführt wird;

- Erkennen des getragenen Brillengestells und Schätzen der dreidimensionalen Position des getragenen Brillengestells im Koordinatensystem des Bilderfassungssystems durch Ausrichten einer dreidimensionalen Darstellung des getragenen Brillengestells mit dem getragenen Brillengestell im erfassten Bild;

- Positionieren einer dreidimensionalen Darstellung des ausgewählten Brillengestells im Koordinatensystem des Bilderfassungssystems, wobei die Darstellung des ausgewählten Brillengestells in Bezug auf die Darstellung des getragenen Brillengestells mittels eines Positionierungsversatzes zwischen den beiden Brillengestellen positioniert wird, wobei der Versatz vorher festgelegt wird;

- Ausdrücken der Position jedes charakteristischen Punkts in Bezug auf die dreidimensionale Darstellung des ausgewählten Brillengestells;

- Bestimmen des Parameters bzw. der Parameter aus der relativen Position des charakteristischen Punkts bzw. der charakteristischen Punkte des Auges oder der Augen in Bezug auf die dreidimensionale Darstellung des ausgewählten Brillengestells.

2.  Verfahren nach Anspruch 1, **dadurch gekennzeichnet, dass** das Schätzen der dreidimensionalen Position des getragenen Brillengestells durch Berechnen des Minimums einer Abstandsfunktion zwischen der Kontur der Projektion der dreidimensionalen Darstellung des getragenen Brillengestells und der Kontur des getragenen Brillengestells im erfassten Bild durchgeführt wird, wobei die dreidimensionale Darstellung des getragenen Brillengestells gegliedert und/oder verformt werden kann.

3.  Verfahren nach einem der Ansprüche 1 bis 2, **dadurch gekennzeichnet, dass** der charakteristische Punkt eines Auges der Mitte seiner Pupille ist, der als Mitte eines die Iris darstellenden Kreises berechnet wird, wobei der Kreis durch Berechnen des Minimums einer Abstandsfunktion zwischen der Projektion des Kreises und der Kontur der Pupille auf dem gleichzeitig erfassten Bild bzw. den gleichzeitig erfassten Bildern in drei Dimensionen positioniert und ausgerichtet wird.

4.  Verfahren nach Anspruch 3, **dadurch gekennzeichnet, dass** die Position der Mitte des Augapfels eines Auges berechnet wird:

    - in dem Fall, in dem der Blickpunkt des Auges bekannt ist, als gleich dem Punkt, der sich auf der Linie befindet, die durch die Mitte der Pupille des Auges und den Blickpunkt definiert ist, in einem Abstand, der dem mittleren Radius eines Augapfels entspricht;
    - in dem Fall, in dem der Blickpunkt des Auges unbekannt ist, als gleich der Mitte einer Kugel mit einem Radius, der gleich dem mittleren Radius des Augapfels ist, und bei der die Iris eine Schnittebene darstellt.

5.  Verfahren nach Anspruch 4, **dadurch gekennzeichnet, dass** es auch die folgenden Schritte umfasst:

    - Bestimmen der 3D-Position des Blickpunkts;
    - Korrigieren der Position des Drehmittelpunkts des Augapfels basierend auf der 3D-Position des vorher bestimmten Blickpunkts.

6.  Verfahren nach einem der Ansprüche 1 bis 5, **dadurch gekennzeichnet, dass** es auch einen Schritt des Bestimmens des Positionierungsversatzes zwischen der dreidimensionalen Darstellung des ausgewählten Brillengestells und der dreidimensionalen Darstellung des zweiten von der Person getragenen Brillengestells durch Positionieren der beiden dreidimensionalen Darstellungen auf einem repräsentativen dreidimensionalen Modell eines Gesichts umfasst.

7.  Verfahren nach einem der Ansprüche 1 bis 6, **dadurch gekennzeichnet, dass** das Verfahren auch einen Schritt des Erstellens eines dreidimensionalen Modells des Gesichts der Person ohne Brille anhand mindestens eines vorher erfassten Bilds des Gesichts der Person ohne Brille umfasst, wobei eine Ausrichtung des Modells des Gesichts ohne Brille mit einem Bild des Gesichts der Person mit Brille durchgeführt wird, um die Position der charakteristischen Punkte in Bezug auf die dreidimensionale Darstellung des getragenen Brillengestells zu schätzen.

8.  Verfahren nach einem der Ansprüche 1 bis 7, **dadurch gekennzeichnet, dass** das Bilderfassungssystem stereoskopisch ist und/oder mindestens eine Infrarotkamera umfasst.

9. Verfahren nach einem der Ansprüche 1 bis 8, **dadurch gekennzeichnet, dass** alle oder einige der Kameras des Bilderfassungssystems metrisch kalibriert werden.

10. Verfahren nach einem der Ansprüche 1 bis 9, **dadurch gekennzeichnet, dass** der bestimmte Parameter in der folgenden Liste enthalten ist:

   - Pupillendistanz (PD);
   - monokulare Pupillendistanz (monoPD);
   - pantoskopischer Winkel (PA);
   - Hornhautscheitelabstand (VD);
   - Höhe zwischen der Rahmenbasis und der Mitte einer Pupille (FH) ;
   - Höhe zwischen der Rahmenbasis und dem unteren Augenlid (SH) ;
   - effektiver Durchmesser der Gläser (ED);
   - Blickpfad, auch Fortschrittspfad genannt.

11. Verfahren nach Anspruch 10, **dadurch gekennzeichnet, dass** das Bestimmen des pantoskopischen Winkels durchgeführt wird durch:

   - Erkennen der beiden Mundwinkel der Person;
   - Schätzen der 3D-Position des Mittelpunkts zwischen den beiden Mundwinkeln;
   - Bestimmen des Werts des pantoskopischen Winkels durch Berechnen des Winkels zwischen der Ebene, die durch den Mittelpunkt und den charakteristischen Punkt jeder Pupille gebildet wird, und der Ebene der in das ausgewählte Brillengestell eingepassten Gläser.

12. Verfahren nach einem der Ansprüche 1 bis 11, **dadurch gekennzeichnet, dass** mindestens ein Parameter auch entsprechend einem unteren Punkt des Brillengestells bestimmt wird, wobei der untere Punkt auf einer Linie liegt, die gleichzeitig die beiden Brillengläser tangiert.

13. Verfahren nach einem der Ansprüche 1 bis 12, **dadurch gekennzeichnet, dass** es auch einen Schritt des Sendens einer Bestellung für ein Brillenglas unter Berücksichtigung des vorher bestimmten Parameters bzw. der vorher bestimmten Parameter und/oder einen Schritt des Bearbeitens eines Brillenglases einer Brille anhand des vorher bestimmten Parameters bzw. der vorher bestimmten Parameter umfasst.

14. Computerprogrammprodukt, das eine Reihe von Programmcodeanweisungen zum Ausführen der Schritte des automatischen Bestimmungsverfahrens nach einem der Ansprüche 1 bis 13 umfasst, wenn das Programm auf einem Computer ausgeführt wird.

15. Vorrichtung, umfassend einen Bildschirm, eine Mehrzahl von Kameras, einen Computerprozessor und einen Computerspeicher, in dem das Computerprogrammprodukt nach Anspruch 14 gespeichert ist.

## Claims

1. A method, implemented by computer, for automatically determining at least one parameter associated with an ophthalmic device selected by an individual, said ophthalmic device comprising a frame so-called the selected frame, said determination being performed based on an image of the face of the individual wearing a frame of an ophthalmic device, so-called the worn frame, said worn frame being the frame of a second ophthalmic device, said image being acquired by an image acquisition system, the image acquisition system being calibrated metrically, the method comprising the steps of:

   - detecting at least one characteristic point of at least one eye of the individual on the acquired image and estimating, in the reference frame of the image acquisition system, the three-dimensional position of the detected characteristic point(s), the estimation of said three-dimensional position being performed either by triangulation of the 2D position of the characteristic point(s) in each of the acquired images simultaneously in a stereoscopic manner by at least two cameras of the image acquisition system, or using a depth camera of the image acquisition system;
   - detecting the worn frame and estimating the three-dimensional position of the worn frame in the reference frame of the image acquisition system by aligning a three-dimensional representation of the worn frame with the worn frame in the acquired image;

- positioning, in the reference frame of the image acquisition system, a three-dimensional representation of the selected frame, the representation of the selected frame being positioned with respect to the representation of the worn frame via a positioning offset between the two frames, said offset being established beforehand;

- expressing the position of each characteristic point with respect to the three-dimensional representation of the selected frame;

- determining the parameter(s) based on the relative position of the characteristic point(s) of the eye(s) with respect to the three-dimensional representation of the selected frame.

2. The method according to claim 1, **characterised in that** the estimation of the three-dimensional position of the worn frame is performed by computing the minimum of a function of a distance between the contour of the projection of the three-dimensional representation of the worn frame and the contour of the worn frame in the acquired image, the three-dimensional representation of the worn frame could be articulated and/or deformed.

3. The method according to any one of claims 1 to 2, **characterised in that** the characteristic point of an eye is the centre of its pupil which is computed as the centre of a circle representing the iris, said circle being positioned and oriented in three dimensions by computing the minimum of a function of a distance between the projection of the circle and the contour of the pupil on the image(s) acquired simultaneously.

4. The method according to claim 3, **characterised in that** the position of the centre of the eyeball of an eye is computed:

- in the case where the point of gaze of said eye is known, as equal to the point located on the straight line defined by the centre of the pupil of said eye and said point of gaze, at a distance equal to the mean radius of an eyeball;

- in the case where the point of gaze of said eye is unknown, as equal to the centre of a sphere having a radius equal to the mean radius of the eyeball and for which the iris represents a sectional plane.

5. The method according to claim 4, **characterised in that** it further comprises steps of:

- determining the 3D position of the point of gaze;

- correcting the position of the centre of rotation of the eyeball based on the 3D position of the point of gaze determined beforehand.

6. The method according to any one of claims 1 to 5, **characterised in that** it also comprises a step of determining the positioning offset between the three-dimensional representation of the selected frame and the three-dimensional representation of the second frame worn by the individual, by positioning the two three-dimensional representations on a three-dimensional model representing a face.

7. The method according to any one of claims 1 to 6, **characterised in that** the method also comprises a step of elaborating a three-dimensional model of the face of the individual without spectacles based on at least one image of the face of the individual without spectacles acquired beforehand, the alignment of the model of the face without spectacles with an image of the face of the individual with spectacles being performed to estimate the position of the characteristic points with respect to the three-dimensional representation of the worn frame.

8. The method according to any one of claims 1 to 7, **characterised in that** the image acquisition system is stereoscopic and/or comprises at least one infrared camera.

9. The method according to any one of claims 1 to 8, **characterised in that** all or some of the cameras of the image acquisition system are calibrated metrically.

10. The method according to any one of claims 1 to 9, **characterised in that** the determined parameter is one amongst the following list:

- interpupillary distance (PD);
- monocular interpupillary distance (monoPD);
- pantoscopic angle (PA);
- vertex distance (VD);
- height between the bottom of the frame and the centre of a pupil (FH);

- height between the bottom of the frame and the bottom eyelid (SH);
- effective diameter of the lenses (ED);
- gaze path, also so-called progression path.

11. The method according to claim 10, **characterised in that** the determination of the pantoscopic angle is performed by:

- detecting the two corners of the mouth of the individual;
- estimating the 3D position of the midpoint between the two corners of the mouth;
- determining the value of the pantoscopic angle by computing the angle between the plane formed by the midpoint and the characteristic point of each pupil, and the plane of the lenses assembled in the selected frame.

12. The method according to any one of claims 1 to 11, **characterised in that** at least one parameter is determined also according to a bottom point of the frame, the bottom point lying on a straight line tangent to both lenses.

13. The method according to any one of claims 1 to 12, **characterised in that** it further comprises a step of sending a lens command taking the parameter(s) determined beforehand into account and/or a step of machining a lens of a pair of spectacles based on the parameter(s) determined beforehand.

14. A computer program product comprising a series of program code instructions for the execution of the steps of the automatic determination method according to any one of claims 1 to 13, where said program is executed on a computer.

15. A device comprising a screen, a plurality of cameras, a computer processor and a computer memory storing the computer program product according to claim 14.

FIG. 1

FIG. 2

FIG. 3

FIG. 4

DATUM

BOXING

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014253875 A1
- US 2009021693 A1
- EP 2772795 A
- WO 2013139814 A
- WO 2013045531 A
- WO 2016135078 A

**Littérature non-brevet citée dans la description**

- **F. CHABOT ; M. CHAOUCH.** Deep MANTA: A Coarse-to-fine Many-Task Network for joint 2D and 3D vehicle analysis from monocular image. *CVPR,* 2017
- **YUMI IWASHITA ; RYO KURAZUME ; KENJI HARA.** *Fast Alignment of 3D Geometrical Models and 2D Color Images using 2D Distance Maps*
- **T.W. DRUMMOND ; R. CIPOLLA.** *Real-time tracking of complex structures with on-line caméra calibration,* 2002
- **VACCHETTI, V. LEPETIT ; P. FUA.** Combining Edge and Texture Information for Real-Time Accurate 3D Caméra Tracking. *Third IEEE and ACM International Symposium on Mixed and Augmented Reality,* 2004